# EUROPÄISCHE PATENTSCHRIFT

(11) **EP 3 597 816 B1**
(45) Veröffentlichungstag und Bekanntmachung des Hinweises auf die Patenterteilung: **26.05.2021**
(21) Anmeldenummer: 18184510.8
(22) Anmeldetag: 19.07.2018
(51) Int. Cl.: D06M 13/395, C08G 18/80, C09J 175/04, C08G 18/64, C08G 18/76, C08L 9/08, C09D 109/08

(54) **TAUCHBADZUSAMMENSETZUNGEN ZUR BEHANDLUNG VON VERSTÄRKUNGSEINLAGEN**
DIPPING BATH COMPOSITIONS FOR TREATING REINFORCEMENT INSERTS
COMPOSITIONS DE BAIN DE TREMPAGE DESTINÉES AU TRAITEMENT DES INSERTS DE RENFORT

(43) Veröffentlichungstag der Anmeldung: 22.01.2020
(73) Patentinhaber: EMS-CHEMIE AG, 7013 Domat/Ems (CH)
(72) Erfinder: HOLZSCHUH, Martin, 7013 Domat/Ems (CH); KAPLAN, Andreas, 7000 Chur (CH)
(74) Vertreter: Pfenning, Meinig & Partner mbB

(56) Entgegenhaltungen:
- EP-A1- 1 038 899
- EP-A1- 3 258 008
- WO-A1-2013/036739
- WO-A1-2014/091376
- WO-A2-00/05287
- JP-A- H0 397 965
- JP-A- 2003 221 787

## Beschreibung

Die vorliegende Erfindung betrifft Tauchbadzusammensetzungen zur Behandlung von Verstärkungseinlagen und deren Verwendung zur Herstellung von verstärkten Gummiprodukten. Außerdem betrifft die vorliegende Erfindung Verfahren zur Herstellung einer haftenden Verstärkungseinlage.

Bei der Herstellung von verstärkten Gummiprodukten hat es sich als vorteilhaft erwiesen, wenn zur Verbesserung der Haftfestigkeit, zwischen Verstärkungseinlage und dem Gummi ein Haftvermittler eingesetzt wird. Bedeutung hat ein derartiger Haftvermittler insbesondere im Bereich von Reifencord als Verstärkungseinlage und anderen hochbelasteten Verbundwerkstoffen mit Verstärkungsfasern. Insbesondere für die Anwendung im Reifencordbereich ist es bekannt geworden, Resorcin-Formaldehyd-Latexsysteme (RFL) zur Verbindung von synthetischen Fasern zu Gummiprodukten einzusetzen. Die Bestandteile Resorcin und Formaldehyd der RFL werden aber als gesundheitsschädlich eingestuft und es ist darum vorteilhaft ihren Einsatz zu vermeiden. Aus dem Stand der Technik sind bereits Haftvermittler zur Herstellung von haftenden Verstärkungseinlagen bekannt.

WO 2014/175844 A1 beschreibt eine Tauchbadzusammensetzung, die es ermöglicht, dass die synthetische Faser, die umweltfreundlich ist und bei der Herstellung von Cordgewebe verwendet wird, und der Kautschuk aneinander befestigt werden, indem eine Phase zwischen den zwei Strukturen bereitgestellt wird. Es wird eine Tauchlösung bereitgestellt, die umweltfreundlichere Chemikalien enthält, wobei der gewünschten Effekt durch Behandeln von Kordgeweben über eine kürzere Zeitdauer erreicht wird und welche die Herstellung der Kords in den gewünschten Farben, wegen ihrer blassen, gelblichen Farbe, ermöglicht.

WO 2015/188939 A1 betrifft eine formaldehyd- und resorcinfreie Eintauchlösung für Kordgewebe und ein Herstellungsverfahren dafür, umfassend die folgenden Schritte. Zugeben von Acrylpolymerharz zu Wasser, Einstellen des pH-Werts, Hinzufügen von Epoxid zu der Zusammensetzung, Zugeben von Polyisocyanat zu der Zusammensetzung, Hinzufügen von Latex zu der Zusammensetzung, Erhalten des Eintauchmaterials; Ermöglichen, dass die synthetische Faser und der Kautschuk, die bei der Herstellung von mit Cordgewebe verstärkten Gummimaterialien verwendet werden, aneinander befestigt werden, indem eine Grenzfläche zwischen zwei der genannten Materialien bereitgestellt wird.

US 4,204,982 beschreibt Gummimischungen, die unter Verwendung eines Tauchverfahrens an Reifenkorde gebunden werden. Das Tauchbad enthält eine alkalische wässrige Dispersion eines Gemischs mit einem Hauptgewichtsanteil eines kautschukartigen carboxylierten Dien-Copolymers und einer Mindermenge eines Lignin-Amin-Formaldehyd-Reaktionsprodukts.

US 4,026,744 beschreibt Kautschukverbindungen, die mit Verstärkungselementen, insbesondere Reifencords aus Glasfasern, unter Verwendung eines einstufigen Tauchverfahrens verbunden werden. Das Tauchbad enthält eine alkalische wässrige Dispersion eines Gemisches aus einer Hauptgewichtsmenge eines kautschukartigen Vinylpyridin/Styrol/Butadiens Terpolymers und einem Ligninsulfonat-Resorcin-Formaldehyd-Reaktionsprodukt.

Die WO 2014/091376 A1 beschreibt eine wässrige, feststoffhaltige Tauchbadzusammensetzung zur Behandlung von Verstärkungseinlagen für Gummiprodukte mit einer umweltfreundlichen Zusammensetzung ohne Einsatz von Resorcinol-Formaldehyd-Latex.

Die EP 3 258 008 A1 betrifft ein Verfahren zur Herstellung einer Festigkeits-Trägerlage für elastomere Erzeugnisse, insbesondere ein Fahrzeugreifen, der eine solche Festigkeits-Trägerlage enthält.

Die aus dem Stand der Technik bekannten Tauchbäder enthalten neben den Resorcin-Formaldehyd-Latexsystemen auch Epoxide. Epoxide werden verwendet, um Hafteigenschaften zu erreichen. Der Einsatz von Epoxiden in Tauchbädern bringt aber einige Nachteile mit sich. Zum Einen verursachen Epoxide ein Schäumen der Tauchbadzusammensetzungen, es ist also notwendig Entschäumer zuzusetzen. Zum Anderen wird die Lagerfähigkeit der Tauchbadzusammensetzungen durch den Zusatz von Epoxiden verringert. Weiterhin verlangt das Lösen der Epoxide hohe Scherkräfte und beansprucht sehr viel Zeit. Ein unvollständiges Lösen der Epoxide führt zu Fehlstellen in der Beschichtung der Verstärkungseinlage und damit zu Haftproblemen. Ohne den Zusatz von Epoxiden ist es aber unter Verwendung der aus dem Stand der Technik bekannten Tauchbäder nicht möglich verstärkte Gummiprodukte herzustellen, die gute Hafteigenschaften, insbesondere eine gute Peel-Haftung und einen guten Oberflächenbedeckungsgrad nach dem Peel-Haftungstest, aufweisen.

Davon ausgehend war es Aufgabe der vorliegenden Erfindung eine Tauchbadzusammensetzung bereitzustellen, die es ermöglicht verstärkte Gummiprodukte herzustellen, die sehr gute Hafteigenschaften, insbesondere eine sehr gute Peel-Haftung und einen guten Oberflächenbedeckungsgrad nach dem Peel-Haftungstest, aufweisen ohne, dass die oben - aus der Verwendung von Epoxiden resultierenden - diskutierten Probleme auftreten. Außerdem soll der Einsatz von Resorcin-Formaldehyd-Latexsystemen vermieden werden, die die gesundheitsschädlichen Stoffe Resorcin und Formaldehyd enthalten. Diese Aufgabe wird von der erfindungsgemäßen wässrigen, feststoffhaltigen Tauchbadzusammensetzung zur Behandlung von Verstärkungseinlagen gemäß Anspruch 1 gelöst, welche die folgenden Komponenten enthält oder aus diesen Komponenten besteht:
(A) mindestens eine verkappte Methylendiphenylisocyanat (=MDI)-Mischung,
   wobei die MDI-Mischung MDI-Oligomere der Formel (I), wobei n eine ganze Zahl von 1 bis 8 ist, 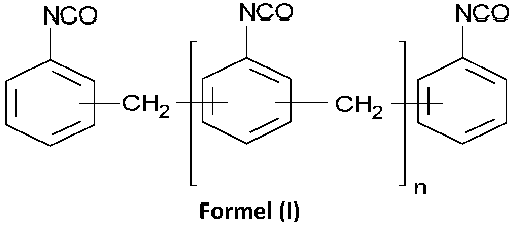 und MDI-Monomere enthält;
(B) mindestens einen Latex und
(C) mindestens eine Verbindung ausgewählt aus der Gruppe bestehend aus Polyacrylaten, Ligninsulfonaten, Linolsulfonsäuren und Mischungen hiervon;
wobei die Tauchbadzusammensetzung weniger als 0,4 Gew.-%, bezogen auf das Gesamtgewicht der Tauchbadzusammensetzung, Epoxid enthält, und
wobei die Tauchbadzusammensetzung weniger als 1,0 Gew.-% bezogen auf das Gesamtgewicht der Tauchbadzusammensetzung, Resorcin, Formaldehyd und deren Reaktionsprodukten enthält.

Die Patentansprüche 2 bis 10 geben bevorzugte Ausführungsformen der Tauchbadzusammensetzung an.

Der Patentanspruch 11 betrifft ein Verfahren zur Herstellung einer haftenden Verstärkungseinlage gemäß Ansprüche 1 bis 10 und die Ansprüche 12 bis 14 geben bevorzugte Ausführungsformen dieses Verfahrens an.

Patentanspruch 15 betrifft die Verwendung der Tauchbadzusammensetzung gemäß Ansprüche 1 bis 10 zur Beschichtung von Verstärkungseinlagen für Gummiprodukte.

### Begriffsdefinitionen

Der Begriff "verkappt" im Sinne der vorliegenden Erfindung meint eine reversible Blockierung der Isocyanatfunktion. Bevorzugt ist dabei eine vollständige Verkappung, die durch Verwendung des Verkappungsmittels in überstöchiometrischen Mengen erreicht wird.

Die erfindungsgemäßen Tauchbadzusammensetzungen sind wässrig, d.h. als flüssige Phase wird Wasser verwendet. Wasser wird im Folgenden nicht als Komponente der Tauchbadzusammensetzung aufgeführt. Vorzugsweise ist die Tauchbadzusammensetzung im Wesentlichen frei von organischen Lösungsmitteln, also von organischen Flüssigkeiten, die nicht an den Reaktionen teilnehmen. Im Wesentlichen frei heißt, es sind weniger als 5 Gew.-%, bevorzugt weniger als 2 Gew.-% an organischen Lösungsmitteln, bezogen auf das Gesamtgewicht der Tauchbadzusammensetzung, enthalten. Vorzugsweise ist die Tauchbadzusammensetzung vollkommen frei von organischen Lösungsmitteln.

Weiterhin ist die erfindungsgemäße Tauchbadzusammensetzung im Wesentlich frei von Epoxiden, d.h. es sind weniger als 0,4 Gew.-%, bevorzugt weniger als 0,16 Gew.-% bezogen auf das Gesamtgewicht der Tauchbadzusammensetzung. Vorzugsweise sind die Tauchbadzusammensetzungen vollkommen frei von Epoxiden.

Außerdem sind die erfindungsgemäße Tauchbadzusammensetzung im Wesentlich frei von Resorcin und Formaldehyd und deren Reaktionsprodukten, d.h. es sind in Summe weniger als 1,0 Gew.-%, bevorzugt weniger als 0,5 Gew.-%, besonders bevorzugt weniger als 0,16 Gew.-% jeweils bezogen auf das Gesamtgewicht der Tauchbadzusammensetzung. Vorzugsweise sind die Tauchbadzusammensetzungen vollkommen frei von Resorcin und Formaldehyd und deren Reaktionsprodukten.

Die MDI-Mischung gemäß der vorliegenden Erfindung enthält die Komponenten (i), (ii) und gegebenenfalls (iii) oder besteht bevorzugt ausschließlich aus diesen, es gilt dabei die Maßgabe, dass sich die Komponenten (i), (ii) und (iii) in Summe auf 100 Gew.-% ergänzen. Die festgelegten Bereiche der Mengenangaben für die einzelnen Komponenten (i), (ii) und (iii) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (i) bis (iii) 100 Gew.-% ergibt.

### Tauchbadzusammensetzung

Im Folgenden werden bevorzugte Ausführungsformen der erfindungsgemäßen Tauchbadzusammensetzung angegeben.

Gemäß einer bevorzugten Ausführungsform der vorliegenden Erfindung beträgt der Feststoffanteil der Tauchbadzusammensetzung 2 bis 40 Gew.-%, bevorzugt 3 bis 35 Gew.-% und besonders bevorzugt 5 bis 30 Gew.-% und am bevorzugtesten 9 bis 16 Gew.-% bezogen auf das Gesamtgewicht der Tauchbadzusammensetzung.

Eine andere bevorzugte Ausführungsform sieht vor, dass die wässrige, feststoffhaltige Tauchbadzusammensetzung die folgende Zusammensetzung aufweist, wobei die Gew.-teile jeweils auf das Gesamtgewicht der Tauchbadzusammensetzung bezogen sind:
(A) 0,1 bis 25 Gew.-teile, bevorzugt 0,2 bis 20 Gew.-teile, besonders bevorzugt 1 bis 17 Gew.-teile und am bevorzugtesten 8 bis 15 Gew-Teile;
(B) 1 bis 80 Gew.-teile, bevorzugt 8 bis 50 Gew.-teile, besonders bevorzugt 15 bis 45 Gew.-teile und am bevorzugtesten 38 bis 42 Gew.-Teile;
(C) 0,1 bis 15 Gew.-Teile, bevorzugt 0,25 bis 12 Gew.-teile, besonders bevorzugt 0,4 bis 8 Gew.-teile und am bevorzugtesten 0,6 bis 4 Gew.-Teile; und
(D) 0 bis 20 Gew.-Teile, bevorzugt 0,1 bis 10 Gew.-teile und besonders bevorzugt 0,1 bis 3 Gew.-teile.

Nach einer anderen bevorzugten Ausführungsform der vorliegenden Erfindung enthält die verkappte MDI-Mischung (A) MDI-Derivate, die ausgewählt sind aus der Gruppe bestehend aus MDI-Uretdion, Addukten von MDI und/oder MDI-Oligomeren mit anderen Verbindungen, vorzugsweise mit Polyethylenglykol und Mischungen hiervon.

Eine weitere bevorzugte Ausführungsform vorliegender Erfindung sieht vor, dass das MDI ausgewählt ist aus der Gruppe bestehend aus 4,4'-MDI, 2,4'-MDI, 2,2'-MDI und Mischungen hiervon, wobei der Anteil von 2,4'-MDI und 2,2'-MDI kleiner als 10 Gew.-%, bevorzugt kleiner als 8 Gew.-% ist und besonders bevorzugt ist der Anteil von 2,4'-MDI und 2,2'-MDI von 0,1 bis 6 Gew.-%, bezogen auf die MDI-Mischung, besonders bevorzugt enthält die Mischung ein oder mehrere MDI-Oligomere, wobei n in Formel (I) eine ganze Zahl von 1 bis 8 und vorzugsweise von 1 bis 6 ist.

Nach einer anderen bevorzugten erfindungsgemäßen Ausführungsform weist die MDI-Mischung folgende Zusammensetzung auf:
(i) 25 bis 60 Gew.-%, vorzugsweise 25 bis 49,9 Gew.-% MDI-Monomere;
(ii) 40 bis 75 Gew.-%, vorzugsweise 50 bis 74,9 Gew.-% MDI-Oligomere; und
(iii) 0 bis 9 Gew.-%, vorzugsweise 0,1 bis 6 Gew.-% MDI-Derivate;
wobei sich die Anteile der Komponenten (i) bis (iii) zu 100 Gew.-% addieren.

MDI-Mischungen aus MDI-Oligomeren der Formel (I), MDI-Monomeren und gegebenenfalls MDI-Derivaten sind unter der Bezeichnung "polymeres MDI" (PMDI) kommerziell erhältlich, z.B. als Voronate (DowDuPont), Suprosec (Huntsman), Elastoflex (BASF), Lupronat (BASF) oder Autofroth (BASF).

Gemäß einer weiteren bevorzugten Ausführungsform der vorliegenden Erfindung ist der mindestens eine Latex (B) ausgewählt aus der Gruppe bestehend aus Styrol-Butadien-Vinylpyridin Copolymer, Styrol-Butadien-Vinylpyridin Copolymer modifiziert mit Carbonsäure, Styrol-Butadien-Copolymer, Styrol-Butadien-Copolymer modifiziert mit Carbonsäure, Nitril-Butadien-Copolymer, Naturlatex, Chloroprenlatex und Mischungen hiervon.

Nach einer weiteren bevorzugten Ausführungsform der vorliegenden Erfindung ist die mindestens eine Verbindung (C) ausgewählt aus der Gruppe bestehend aus Polymeren auf Basis von (Meth)Acrylsäureestern, (Meth)Acrylsäureaminen, (Meth)Acralsäureamiden, Copolymeren auf Basis von (Meth)Acrylsäureestern, (Meth)Acrylsäureaminen, (Meth)Acrylsäureamiden, Ligninsulfonaten, Ligninsulfonsäuren und Mischungen hiervon.

Nach einer besonders bevorzugten Ausführungsform der vorliegenden Erfindung ist die mindestens eine Verbindung (C) ausgewählt aus der Gruppe bestehend aus Polystyrolacrylaten, Polyacrylsäureestern, Ligninsulfonsäuresalzen, Ligninsulfonsäureestern, Ligninsulfonsäureethern, Ligninsulfonsäuren und Mischungen hiervon.

Eine weitere bevorzugte Ausführungsform vorliegender Erfindung sieht vor, dass das mindestens eine Additiv (D) ausgewählt ist aus der Gruppe bestehend aus Tensiden, Entschäumern, Füllstoffen, Farbstoffen, Konservierungsmitteln, Verdickungsmitteln, Säuren, Laugen, mehrwertigen Alkoholen und Mischungen hiervon.

Nach einer weiteren bevorzugten Ausführungsform der vorliegenden Erfindung ist die MDI-Mischung (A) mit einer Verbindung verkappt, die ausgewählt ist aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam, Oximen, insbesondere Methyl-Ethyl-Ketoxim, Methyl-Amyl-Ketoxim und Cyclohexanonoxim, Enol-bildenden Verbindungen, insbesondere Acetoessigester, Acetylaceton sowie Mischungen hiervon. Bevorzugt ist das Verkappungsmittel ausgewählt aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam und Mischungen hiervon und besonders bevorzugt ausgewählt ist das Verkappungsmittel aus der Gruppe bestehend aus Phenol, ε-Caprolactam und Mischungen hiervon. Am bevorzugtesten ist die MDI-Mischung (A) mit ε-Caprolactam verkappt.

Eine weitere bevorzugte Ausführungsform der vorliegenden Erfindung sieht vor, dass der mittlere Partikeldurchmesser *d*₅₀ der verkappten MDI-Mischung maximal 2 µm; bevorzugt 0,6 bis 1,5 µm beträgt.

Nach einer anderen bevorzugten Ausführungsform vorliegender Erfindung beträgt der Partikeldurchmesser *d*₁₀₀ der verkappten MDI-Mischung maximal 6 µm; bevorzugt 0,6 bis 5 µm.

Gemäß einer weiteren bevorzugten Ausführungsform der vorliegenden Erfindung weist die verkappte MDI-Mischung eine zahlenmittlere Molmasse Mₙ im Bereich von 550 bis 1200 g/mol und bevorzugt von 700 bis 1100 g/mol auf.

Zur Herstellung eines Tauchbades wird in einem Gefäß, bevorzugt in einem gerührten Gefäß, bei Raumtemperatur zunächst deionisiertes Wasser vorgelegt und danach werden die Komponenten (A), (B), (C) und gegebenenfalls (D) eingerührt, bevorzugt werden die Komponenten in der Reihenfolge (C), (A) gegebenenfalls (D) und dann (B) oder in der Reihenfolge (C), (A), (B) und dann gegebenenfalls (D) eingerührt.

### Verfahren zur Herstellung einer haftenden Verstärkungseinlage

Die vorliegende Erfindung betrifft außerdem ein Verfahren zur Herstellung einer haftenden Verstärkungseinlage, welches mindestens die folgenden Schritte umfasst:
a) Bereitstellen zumindest einer Verstärkungseinlage;
b) Eintauchen der bereitgestellten Verstärkungseinlage in mindestens eine erfindungsgemäße Tauchbadzusammensetzung wie oben definiert;
c) Trocknen der Verstärkungseinlage aus Schritt b) bei 100 bis 240 °C;
d) Einbrennen der Beschichtung der Verstärkungseinlage aus Schritt c) bei 200 bis 250 °C.

Im Folgenden werden bevorzugte Ausführungsformen des erfindungsgemäßen Verfahrens zur Herstellung einer haftenden Verstärkungseinlage angegeben.

Gemäß einer bevorzugten Ausführungsform der vorliegenden Erfindung erfolgt Schritt c) bei Temperaturen von 110 bis 210 °C und bevorzugt von 140 bis 180 °C.

Gemäß einer weiteren Ausführungsform der vorliegenden Erfindung erfolgt Schritt d) bei Temperaturen von 220 bis 240 °C.

Eine weitere bevorzugte Ausführungsform der vorliegenden Erfindung sieht vor, dass die Verstärkungseinlage ausgewählt ist aus einer Verbindung aus der Gruppe bestehend aus Polyamid 6, Polyamid 66, Polyethylenterephthalat, Polyethylennaphthalat, Rayon, Aramid, Baumwolle, Basaltfasern, Sisal, Hanf, Flachs, Kokosfasern und Mischungen hiervon.

Gemäß einer anderen bevorzugten Ausführungsform vorliegender Erfindung wird die Verstärkungseinlage vor Schritt b) in eine wässrige, feststoffhaltige Tauchbadzusammensetzung eingetaucht, die mindestens eine verkappte MDI-Mischung enthält und die bevorzugt keine anderen Komponenten enthält, wobei die MDI-Mischung MDI-Oligomere der Formel (I), wobei n eine ganze Zahl von 1 bis 8 ist, 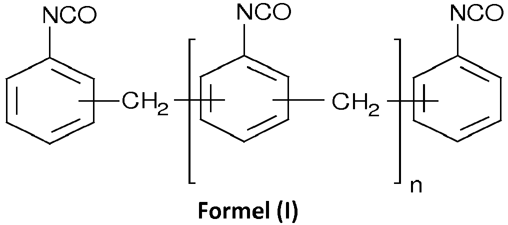 und MDI-Monomere enthält. Nach dem Eintauchschritt ist es bevorzugt, dass das Trocknen und Einbrennen der Schicht unter den oben angegebenen Bedingungen erfolgt bevor Schritt b) des erfindungsgemäßen Verfahrens durchgeführt wird. Bevorzugt erfolgt das Trocknen bei Temperaturen von 110 bis 210 °C und besonders bevorzugt von 140 bis 180 °C. Dabei ist es weiterhin bevorzugt, dass das Trocknen über einen Zeitraum von 30 bis 120 Minuten durchgeführt wird. Weiterhin wird das Einbrennen bei Temperaturen von 220 bis 240 °C durchgeführt. Dabei ist es weiterhin bevorzugt, dass das Einbrennen über einen Zeitraum von 20 bis 120 Minuten durchgeführt wird.

Eine andere bevorzugte Ausführungsform der vorliegenden Erfindung sieht vor, dass der pH-Wert der Tauchbadzusammensetzung vor dem Ausführen von Schritt b) des erfindungsgemäßen Verfahrens und bevor der mindestens eine Latex (B) in die Tauchbadzusammensetzung eingebracht wird in den Bereich von 8 bis 12 bevorzugt 9 bis 11 eingestellt wird, d.h. die Tauchbadzusammensetzung enthält vor der Einstellung des pH-Werts nur die Komponenten (A) und (C) und gegebenenfalls (D). Als Base wird dabei bevorzugt Ammoniaklösung verwendet. Besonders bevorzugt ist es die alkalische Tauchbadzusammensetzung enthaltend die Komponenten (A), (B), (C) und gegebenenfalls (D) vor der Ausführung von Schritt b) zunächst über einen Zeitraum von 12 bis 48 Stunden und bevorzugt für 20 bis 28 Stunden zu Rühren. Der mindestens eine Latex (B) wird vor der Ausführung von Schritt b) in die Tauchbadzusammensetzung eingebracht.

Eine Reifencord oder eine andere Verstärkungseinlage kann in einer herkömmlichen Beschichtungsanlage beschichtet werden, wobei der überschüssige Anteil des Tauchbads mit Hilfe einer mechanischen Vorrichtung und/oder einer Vakuumabsaugung bei 1 bis 5 mbar entfernt und die Beschichtung in einem Ofen für 20 bis 120 s bei 100 bis 240 °C zuerst getrocknet und anschließend in einem weiteren Ofen für 20 bis 120 s bei 200 bis 250 °C eingebrannt wird.

### Verfahren zur Herstellung eines verstärkten Gummiprodukts

Die vorliegende Erfindung betrifft außerdem ein Verfahren zur Herstellung eines verstärkten Gummiproduktes, welches die folgenden Schritte umfasst:
(i) Bereitstellen von mindestens einer Lage einer haftenden Verstärkungseinlage hergestellt über das erfindungsgemäße Verfahren wie oben definiert;
(ii) Einbetten von mindestens einer Lage aus einer haftenden Verstärkungseinlage aus Schritt (i) in eine Gummimatrix in einer Pressform;
(iii) Pressen der Lagen aus Schritt (ii);
(iv) Vulkanisieren des verstärkten Gummiprodukts aus Schritt (iii) bei 140 bis 210 °C und 5 bis 110 bar für 5 bis 45 Minuten;
(v) Entnehmen des verstärkten Gummiprodukts aus Schritt (iv) aus der Pressform.

Gemäß einer bevorzugten Ausführungsform der vorliegenden Erfindung handelt es sich bei den verstärkten Gummiprodukten um Reifen, sowohl für PKW, Motorräder als auch für Nutzfahrzeuge und Flugzeuge und um technische Gummierzeugnisse, insbesondere um Förderbänder, Luftfedern, Schläuche und Treibriemen, z.B. Keilriemen, Keilrippriemen, Rundriemen, Flachriemen oder Zahnriemen.

### Verwendungen

Weiterhin betrifft die vorliegende Erfindung die Verwendung der erfindungsgemäßen Tauchbadzusammensetzung zur Beschichtung von Verstärkungseinlagen für Gummiprodukte.

Bei den verstärkten Gummiprodukten handelt es sich bevorzugt um Reifen, sowohl für PKW, Motorräder und Fahrräder als auch für Nutzfahrzeuge und Flugzeuge und um technische Gummierzeugnisse, insbesondere um Förderbänder, Luftfedern, Schläuche und Treibriemen, z.B. Keilriemen, Keilrippriemen, Rundriemen, Flachriemen oder Zahnriemen.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet.

### Partikeldurchmesser (d₅₀- bzw. d₁₀₀-Wert)

Der Partikeldurchmesser wurde an einem Pulver oder an einer wässriger Dispersion nach ISO 13320 bei 23 °C mittels Laserbeugung bestimmt. Die Lasermessungen wurden mit einem Granulometer Cilas 1064 der Quantachrome GmbH (Deutschland) durchgeführt.

### Peel-Haftung

Die Peel-Haftung wurde nach ASTM 4393 bestimmt. Dafür wurden achtlagige Prüfkörper mit symmetrischem Aufbau (2 Lagen Cord (= haftende Verstärkungseinlage) und 6 Lagen Gummi, vgl. Fig. 2, ASTM 4393) hergestellt. Die Zugprüfung erfolgte bei einer Messtemperatur von 23 °C mit einer Zuggeschwindigkeit von 20 mm/min. Die Zugprüfung wurde nach Option 1 der ASTM 4393 ausgewertet. Als Gummi wurde der GB-Rubber der Firma Wuxi Segen Rubber Tech. Co., Ltd, China (Dicke 0,4 mm) verwendet. Die Vulkanisation erfolgte bei drei unterschiedlichen Bedingungen, 160 °C, 100 bar für 12,5 Minuten, 170 °C, 100 bar für 15 Minuten und 170 °C, 100 bar für 30 Minuten.

### Oberflächenbedeckungsgrad

Der Oberflächenbedeckungsgrad nach der Peel-Haftungsprüfung wurde durch eine visuelle Prüfung bestimmt, indem das entsprechende Reifenmaterial mit internen Mustern verglichen wurde, die eine Bedeckung von 0 bis 100 % aufwiesen. Eine Bedeckung von 0 % bedeutet, dass sich die haftende Verstärkungseinlage nach der Peel-Haftungsprüfung vollkommen vom Gummi abgelöst hat, der Bruch erfolgte also in der Grenzschicht zwischen Reifencord und Gummi. Eine Bedeckung von 100 % bedeutet hingegen, dass keine Ablösung der haftenden Verstärkungseinlage vom Gummi erfolgte, d.h. der Bruch erfolgte im Gummi.

### Feststoffgehalt

Der Feststoffgehalt wird durch Abdampfen in einem Halogentrockner (Mettler Halogentrockner HR 73) bestimmt. Dazu werden in eine Aluminiumschale (Durchmesser: 95 mm,) ca. 3 g der Tauchbadzusammensetzung gleichmässig auf dem Schalenboden verteilt. Die Prüfdauer beträgt 25 Minuten bei 80°C. Bei der Anzeigeart wird die Trockenart "Trockengehalt (100 - 0)" gewählt. Angegeben wird der Mittelwert aus drei Bestimmungen.

### Zahlenmittlere Molmasse (Mn)

Die Bestimmung der zahlenmittlere Molmasse (Mn) erfolgt mittels GPC (Gel-Permeations-Chromatographie) mit UV-Detektion.

Zur Messung werden die Proben in THF gelöst (ca. 5 mg in 10 ml) und vor dem Abfüllen in Vials durch Einweg-Spritzenfilter filtriert.

| | |
|---|---|
| Gerät: | Waters 2690 Alliance |
| Software: | Waters Millenium 32 GPC-Modul |
| Säule: | PLgel 100 Ä, Partikelgrösse 3 µm Länge 30,0 cm Innendurchmesser 7,5 mm |
| Wellenlänge UV-Detektor: | 254 nm |
| Eluent: | THF |
| Flussrate: | 1,0 ml/min |

Die zahlenmittlere Molmasse (Mn) wird mit konventioneller Kalibrierung ermittelt. Die Kalibrierung erfolgt mit Polystyrol-Standards (Massen 700, 1100 und 2000) sowie Laurinlactam (Masse 197). Es werden drei Bestimmungen durchgeführt. Angegeben wird das arithmetische Mittel der Molmasse in g/mol. Das Lösungsmittel THF wurde in HPLC-Qualität bei EGT-Chemie, Schweiz bezogen. Die Einwegfilter sind erhältlich bei Macherey-Nagel GmbH & Co. KG, Deutschland, unter der Bezeichnung Chromafil A-45/25 (Porengrösse 0,45 µm, Filterdurchmesser 25 mm). Die Einwegspritzen sind erhältlich bei VWR International GmbH, Deutschland.

### 2 Ausgangsmaterialien

Die in den Beispielen und Vergleichsbeispielen verwendeten Materialien werden in Tabelle 1 zusammengefasst.

**Tabelle 1:**

| | |
|---|---|
| CL-verkappte MDI-Mischung (A1) | Wässrige Dispersion aus mit ε-Caprolactam verkappter MDI-Mischung und Tensid^{a)} Feststoffgehalt: 50 Gew.-% |
| | Zahlenmittlere Molmasse Mₙ der mit ε-Caprolactam verkappten MDI-Mischung: 740 g/mol |
| | volumenmittlerer Partikeldurchmesser: d₅₀ = 1,2 µm, d₁₀₀ = 3,6 µm |
| | Hersteller: EMS-CHEMIE AG, Schweiz |
| CL-verkapptes niedermolekulares Diisocyanat (A2) | Wässrige Dispersion aus mit ε-Caprolactam verkapptem 4,4'-Diphenylmethan-diisocyanat und Tensid Feststoffgehalt: 60 Gew.-% |
| | Zahlenmittlere Molmasse Mₙ des mit ε-Caprolactam verkapptem 4,4'-Diphenylmethan-diisocyanats: 477 g/mol |
| | volumenmittlerer Partikeldurchmesser: d₅₀ = 0,9 µm, d₁₀₀ = 3,0 µm |
| | Hersteller: EMS-CHEMIE AG, Schweiz |
| VP-Latex (B1) | Wässrige Styrol-Butadien-Vinylpyridin Dispersion Feststoffgehalt: 41 Gew.-% |
| | Handelsname: Pliocord VP 106 |
| | Hersteller: OMNOVA Solutions, USA |
| SBR-Latex (B2) | Wässrige Styrol-1,3-Butadien-Copolymer Dispersion Feststoffgehalt: 50 Gew.-% |
| | Handelsname: Lipaton SB 5811 |
| | Hersteller: Synthomer, Deutschland |
| Ligninsulfonat (C1) | Ligninsulfonsäure, Natriumsalz |
| | Vertrieb durch Carl Roth GmbH + Co. KG, Deutschland |
| Polyacrylat (C2) | Wässrige Polystyrolacrylat Dispersion aus Polystyrolacrylat, neutralisiert mit 13 Gew.-% wässeriger NH₃-Lsg. (25 %-ig) |
| | Feststoffgehalt: 43 Gew.-% |
| | Handelsname: Joncryl 8085 |
| | Hersteller: BASF SE, Deutschland |
| Polyacrylat (C3) | Wässrige Dispersion einer modifizierten Polycarbonsäure mit einem mehrwertigen Alkohol als Vernetzungskomponente |
| | Feststoffgehalt: 50 Gew.-% |
| | Handelsname: Acrodur 950 L |
| | Hersteller: BASF SE, Deutschland |
| RFL (C4) | Wässrige Dispersion aus Resorcin, Formaldehyd, Styrol-Butadien-Vinylpyridin-Latex |
| | Gewichtsverhältnis 1,0 : 0,6 : 9,2 |
| | Feststoffgehalt: 20 Gew.-% |
| | Hersteller: EMS-CHEMIE AG, Schweiz |
| Epoxid (C5) | Glycerintriglycidylether, flüssig |
| | Hersteller: EMS-CHEMIE AG, Schweiz |
| Entschäumer (D1) | Mineralöl-basierter Entschäumer, flüssig |
| | Handelsname: Surfynol DF-220 |
| | Hersteller: Air Products and Chemicals Inc.,USA |

| | |
|---|---|
| a) Die Herstellung der verkappten MDI-Mischung (A1) erfolgte durch Verkappung des von der DowDuPont erhältlichen Produkts "Voronate M600" mit ε-Caprolactam. | |

Als Substrat wurde ein Polyestercord (1670x1x2 dtex, ZS 380, 1x50) der Firma Longlaville Performance Fibers SAS verwendet.

Als Beschichtungsanlage wurde eine Pilotanlage der Mehler Engineering & Service GmbH, Fulda, Deutschland verwendet.

### 3 Beispiele und Vergleichsbeispiele

In den Tabelle 2 und 3 werden die Resultate der erfindungsgemäßen Beispiele und der Vergleichsbeispiele zusammengefasst.

### 4 Diskussion der Ergebnisse

Der Reifencord gemäß der in Tabelle 2 dargestellten erfindungsgemäßen Beispiele 1 bis 6 zeigt durchgängig eine höhere Peel-Haftung und einen höheren Oberflächenbedeckungsgrad als die Reifencords gemäß der in Tabelle 3 abgebildeten Vergleichsbeispiele 7 bis 13. Bemerkenswert ist dabei, dass durch Verwendung des erfindungsgemäßen Tauchbads sogar noch bessere Hafteigenschaften und Oberflächenbedeckungsgrade erreicht wurden, als dies durch den Zusatz von Epoxiden möglich war.

**Tabelle 2: Erfindungsgemäße Beispiele.**

| **Komponenten** | **Einheit** | **Beispiele** | | | | | |
|---|---|---|---|---|---|---|---|
| | | **1** | **2** | **3*** | **4*** | **5**** | **6**** |
| CL-verkappte MDI-Mischung (A1), Feststoffgehalt 50 Gew-% | Gew.-Teile | 15 | 9,4 | 15 | 9,4 | 15 | 9,4 |
| Latex VP (B1) Feststoffgehalt: 41 Gew.-% | Gew.-Teile | 40 | 40 | 40 | 40 | 40 | 40 |
| Ligninsulfonat (C1) | Gew.-Teile | 3 | - | 3 | - | 3 | - |
| Polyacrylat (C2) Feststoffgehalt: 43 Gew.-% | Gew.-Teile | - | 1,2 | - | 1,2 | - | 1,2 |
| Wasser, deionisiert | Gew.-Teile | 142,0 | 149,4 | 142,0 | 149,4 | 142,0 | 149,4 |
| Feststoffgehalt der Tauchbadzusammensetzung | Gew.-% | 13,5 | 10,8 | 13,5 | 10,8 | 13,5 | 10,8 |

| **Messungen** | | | | | | | |
|---|---|---|---|---|---|---|---|
| Peel-Haftung | | | | | | | |
| 160 °C, 12,5 min, 100 bar | N/inch | 290 | 284 | 338 | 332 | 349 | 349 |
| 170 °C, 15 min, 100 bar | | 253 | 256 | 176 | 281 | 289 | 281 |
| 170°C, 30 min, 100 bar | | 203 | 175 | 224 | 198 | 218 | 170 |

| Oberflächen bedecku ngsgrad | | | | | | | |
|---|---|---|---|---|---|---|---|
| 160 °C, 12,5 min, 100 bar | % | 70 | 78 | 77 | 63 | 40 | 83 |
| 170 °C, 15 min, 100 bar | | 27 | 37 | 80 | 55 | 60 | 63 |
| 170°C, 30 min, 100 bar | | 23 | 23 | 57 | 42 | 62 | 42 |

| | | | | | | | |
|---|---|---|---|---|---|---|---|
| * Vor der Zugabe des Latex (B), d.h. die Tauchbadzusammensetzung enthielt die Komponenten (A) und (C), wurde der pH-Wert mit NH₃-Lösung (25-%ig) auf 10,3 eingestellt; ** Vor der Zugabe des Latex (B), d.h. die Tauchbadzusammensetzung enthielt die Komponenten (A) und (C), wurde der pH-Wert mit NH₃-Lösung (25-%ig) auf 10,3 eingestellt und die Tauchbadzusammensetzung enthaltend die Komponenten (A) bis (C) für 24 h gerührt. | | | | | | | |

**Tabelle 3: Vergleichsbeispiele.**

| **Komponenten** | **Einheit** | **Vergleichsbeispiele** | | | | | | |
|---|---|---|---|---|---|---|---|---|
| | | **7** | **8** | **9** | **10** | **11** | **12** | **13** |
| CL-verkapptes Diisocyanat (A2), FG: 60 Gew.-% | Gew.-Teile | 12,5 | 12,5 | 7,8 | 7,8 | 7,8 | 2,5 | 4,2 |
| Latex VP (B1), FG: 41 Gew.-% | Gew.-Teile | 40 | 40 | 40 | 40 | 22,7 | 29,3 | - |
| Latex SBR (B2), FG: 50 Gew.-% | Gew.-Teile | - | - | - | - | 4 | - | - |
| Ligninsulfonat (C1) | Gew.-Teile | 3 | 3 | - | - | - | - | - |
| Polyacrylat (C2), FG: 43 Gew.-% | Gew.-Teile | - | - | 1,2 | 1,2 | 0,8 | - | - |
| Polyacrylat (C3), FG: 50 Gew.-% | Gew.-Teile | - | - | - | - | - | 1,3 | - |
| RFL (C4) , FG: 20 Gew.-% | Gew.-Teile | - | - | - | - | - | - | 100 |
| Epoxid, flüssig (C5) | Gew.-Teile | - | 1,05 | - | 1,05 | 3,3 | 0,9 | 1,05 |
| Entschäumer, flüssig (D1) | Gew.-Teile | - | 0,2 | - | 0,2 | 0,2 | 0,2 | 0,2 |
| Wasser, deionisiert | Gew.-Teile | 144,5 | 143,25 | 151,0 | 149,75 | 161,2 | 165,8 | 93,83 |
| FG der Tauchbadzusammensetzung | Gew.-% | 13,5 | 14,0 | 10,8 | 11,4 | 9,9 | 7,6 | 11,8 |

| **Messungen** | | | | | | | | |
|---|---|---|---|---|---|---|---|---|
| Peel-Haftung | | | | | | | | |
| 160 °C, 12,5 min, 100 bar | N/inch | 107 | 262 | 98 | 221 | 237 | 152 | 232 |
| 170 °C, 15 min, 100 bar | | * | 249 | * | * | 211 | * | 191 |
| 170°C, 30 min, 100 bar | | * | 200 | * | * | 155 | * | 143 |

| Oberflächen bedecku ngsgrad | | | | | | | | |
|---|---|---|---|---|---|---|---|---|
| 160 °C, 12,5 min, 100 bar | % | 0 | 10 | 0 | 13 | 13 | 0 | 7 |
| 170 °C, 15 min, 100 bar | | * | 10 | * | * | 17 | * | 12 |
| 170°C, 30 min, 100 bar | | * | 5 | * | * | 12 | * | 7 |

| | | | | | | | | |
|---|---|---|---|---|---|---|---|---|
| FG = Feststoffgehalt, * = nicht gemessen. | | | | | | | | |

## Patentansprüche

1. Wässrige, feststoffhaltige Tauchbadzusammensetzung zur Behandlung von Verstärkungseinlagen für Gummiprodukte enthaltend die folgenden Komponenten oder bestehend aus diesen Komponenten,
(A) mindestens eine verkappte MDI-Mischung,
wobei die MDI-Mischung MDI-Oligomere der Formel (I), wobei n eine ganze Zahl von 1 bis 8 ist, 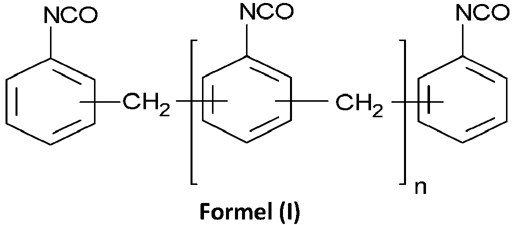 und MDI-Monomere enthält;
(B) mindestens einen Latex; und
(C) mindestens eine Verbindung ausgewählt aus der Gruppe bestehend aus Polyacrylaten, Ligninsulfonaten, Ligninsulfonsäuren und Mischungen hiervon;
wobei die Tauchbadzusammensetzung weniger als 0,4 Gew.-%, bezogen auf das Gesamtgewicht der Tauchbadzusammensetzung, Epoxid enthält, und
wobei die Tauchbadzusammensetzung weniger als 1,0 Gew.-%, bezogen auf das Gesamtgewicht der Tauchbadzusammensetzung, Resorcin, Formaldehyd und deren Reaktionsprodukten enthält.

2. Wässrige, feststoffhaltige Tauchbadzusammensetzung gemäß Anspruch 1, **dadurch gekennzeichnet, dass**
der Feststoffanteil 2 bis 40 Gew.-%, bevorzugt 3 bis 35 Gew.-% und besonders bevorzugt 5 bis 30 Gew.-% jeweils bezogen auf das Gesamtgewicht der Tauchbadzusammensetzung beträgt.

3. Wässrige, feststoffhaltige Tauchbadzusammensetzung gemäß Anspruch 1 oder 2, **dadurch gekennzeichnet, dass**
diese die folgende Zusammensetzung aufweist, wobei die Gew.-Teile jeweils auf das Gesamtgewicht der Tauchbadzusammensetzung bezogen sind:
(A) 0,1 bis 25 Gew.-teile, bevorzugt 0,2 bis 20 Gew.-teile und besonders bevorzugt 1 bis 17 Gew.-teile;
(B) 1 bis 80 Gew.-teile, bevorzugt 8 bis 50 Gew.-teile und besonders bevorzugt 15 bis 45 Gew.-teile;
(C) 0,1 bis 15 Gew.-teile, bevorzugt 0,25 bis 12 Gew.-teile und besonders bevorzugt 0,4 bis 8 Gew.-teile; und
(D) 0 bis 20 Gew.-teile, bevorzugt 0,1 bis 10 Gew.-teile und besonders bevorzugt 0,1 bis 3 Gew.-teile.

4. Wässrige, feststoffhaltige Tauchbadzusammensetzung gemäß einem der vorhergehenden Ansprüche, **dadurch gekennzeichnet, dass**
die verkappte MDI-Mischung (A) MDI-Derivate ausgewählt aus der Gruppe bestehend aus MDI-Uretdion, Addukten von MDI und/oder MDI-Oligomeren mit anderen Verbindungen, vorzugsweise mit Polyethylenglykol und Mischungen hiervon und/oder
das MDI ausgewählt ist aus der Gruppe bestehend aus 4,4'-MDI,2,4'-MDI, 2,2'-MDI und Mischungen hiervon, wobei der Anteil von 2,4'-MDI und 2,2'-MDI kleiner als 10 Gew.-%, bevorzugt kleiner als 8 Gew.-% ist und besonders bevorzugt der Anteil von 2,4'-MDI und 2,2'-MDI von 0,1 bis 6 Gew.-% beträgt, bezogen auf die MDI-Mischung, besonders bevorzugt enthält die Mischung ein oder mehrere MDI-Oligomere, wobei n in Formel (I) eine ganze Zahl von 1 bis 8 und vorzugsweise von 1 bis 6 ist.

5. Wässrige, feststoffhaltige Tauchbadzusammensetzung gemäß einem der vorhergehenden Ansprüche, **dadurch gekennzeichnet, dass** die MDI-Mischung folgende Zusammensetzung aufweist:
(i) 25 bis 60 Gew.-%, vorzugsweise 25 bis 49,9 Gew.-% MDI-Monomere;
(ii) 40 bis 75 Gew.-%, vorzugsweise 50 bis 74,9 Gew.-% MDI-Oligomere; und
(iii) 0 bis 9 Gew.-%, vorzugsweise 0,1 bis 6 Gew.-% MDI-Derivate ausgewählt aus der Gruppe bestehend aus MDI-Uretdion, Addukten von MDI und/oder MDI-Oligomeren mit anderen Verbindungen, vorzugsweise mit Polyethylenglykol und Mischungen hiervon;
wobei sich die Anteile der Komponenten (i) bis (iii) zu 100 Gew.-% addieren.

6. Wässrige, feststoffhaltige Tauchbadzusammensetzung gemäß einem der vorherigen Ansprüche, **dadurch gekennzeichnet, dass**
der mindestens eine Latex (B) ausgewählt ist aus der Gruppe bestehend aus Styrol-Butadien-Vinylpyridin Copolymer, Styrol-Butadien-Vinylpyridin Copolymer modifiziert mit Carbonsäure, Styrol-Butadien-Copolymer, Styrol-Butadien Copolymer modifiziert mit Carbonsäure, Nitril-Butadien-Copolymer, Naturlatex, Chloroprenlatex und Mischungen hiervon.

7. Wässrige, feststoffhaltige Tauchbadzusammensetzung gemäß einem der vorherigen Ansprüche, **dadurch gekennzeichnet, dass**
die mindestens eine Verbindung (C) ausgewählt ist aus der Gruppe bestehend aus Polymeren auf Basis von (Meth)Acrylsäureestern, (Meth)Acrylsäureaminen, (Meth)Acralsäureamiden, Copolymeren auf Basis von (Meth)Acrylsäureestern, (Meth)Acrylsäureaminen, (Meth)Acrylsäureamiden und Mischungen hiervon und bevorzugt ausgewählt aus der Gruppe bestehend aus Polystyrolacrylaten, Polyacrylsäureestern, Ligninsulfonsäuresalzen, Ligninsulfonsäureestern, Ligninsulfonsäureethern, Ligninsulfonsäuren und Mischungen hiervon.

8. Wässrige, feststoffhaltige Tauchbadzusammensetzung gemäß einem der vorherigen Ansprüche, **dadurch gekennzeichnet, dass**
die Tauchbadzusammensetzung mindestens ein Additiv (D) enthält und das mindestens eine Additiv (D) ausgewählt ist aus der Gruppe bestehend aus Tensiden, Entschäumern, Füllstoffen, Farbstoffen, Konservierungsmitteln, Verdickungsmitteln, Säuren, Laugen, mehrwertigen Alkoholen und Mischungen hiervon.

9. Wässrige, feststoffhaltige Tauchbadzusammensetzung gemäß einem der vorhergehenden Ansprüche, **dadurch gekennzeichnet, dass**
die MDI-Mischung (A) mit einer Verbindung verkappt ist, die ausgewählt ist aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam, Oximen, insbesondere Methyl-Ethyl-Ketoxim, Methyl-Amyl-Ketoxim und Cyclohexanonoxim, Enol-bildenden Verbindungen, insbesondere Acetoessigester, Acetylaceton sowie Mischungen hiervon;
und die bevorzugt ausgewählt ist aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam und Mischungen hiervon,
und die besonders bevorzugt ausgewählt ist aus der Gruppe bestehend aus Phenol, ε-Caprolactam und Mischungen hiervon und
die am bevorzugtesten ε-Caprolactam ist.

10. Wässrige, feststoffhaltige Tauchbadzusammensetzung gemäß einem der vorhergehenden Ansprüche, **dadurch gekennzeichnet, dass**
der mittlere Partikeldurchmesser *d*₅₀ der verkappten MDI-Mischung maximal 2 µm, bevorzugt 0,6 bis 1,5 µm beträgt; und/oder
der Partikeldurchmesser *d*₁₀₀ der verkappten MDI-Mischung maximal 6 µm, bevorzugt 0,6 bis 5 µm beträgt; und/oder
die verkappte MDI-Mischung ein zahlenmittleres Molekulargewicht Mₙ im Bereich von 550 bis 1200 g/mol und bevorzugt von 700 bis 1100 g/mol aufweist.

11. Verfahren zur Herstellung einer haftenden Verstärkungseinlage, welches mindestens die folgenden Schritte umfasst:
a) Bereitstellen zumindest einer Verstärkungseinlage;
b) Eintauchen der bereitgestellten Verstärkungseinlage in mindestens eine Tauchbadzusammensetzung gemäß einem der Ansprüche 1 bis 10;
c) Trocknen der Verstärkungseinlage aus Schritt b) bei 100 bis 240 °C;
d) Einbrennen der Beschichtung der Verstärkungseinlage aus Schritt c) bei 200 bis 250 °C.

12. Verfahren gemäß Anspruch 11, **dadurch gekennzeichnet, dass**
die Verstärkungseinlage ausgewählt ist aus einer Verbindung aus der Gruppe bestehend aus Polyamid 6, Polyamid 66, Polyethylenterephthalat, Polyethylennaphthalat, Rayon, Aramid, Baumwolle, Basaltfasern, Sisal, Hanf, Flachs, Kokosfasern und Mischungen hiervon.

13. Verfahren gemäß Anspruch 11 oder 12, **dadurch gekennzeichnet, dass**
die Verstärkungseinlage vor Schritt b) in eine wässrige, feststoffhaltige Tauchbadzusammensetzung eingetaucht wird, die mindestens eine verkappte MDI-Mischung enthält;
wobei die MDI-Mischung MDI-Oligomere der Formel (I), wobei n eine ganze Zahl von 1 bis 8 ist, 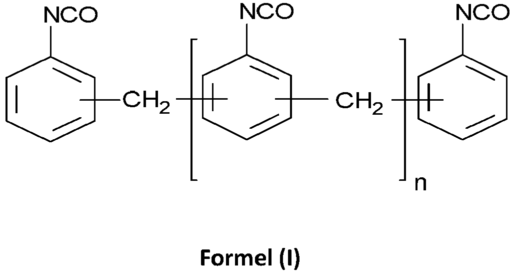 und MDI-Monomere enthält.

14. Verfahren zur Herstellung eines verstärkten Gummiproduktes, welches die folgenden Schritte umfasst:
(i) Bereitstellen von mindestens einer Lage einer haftenden Verstärkungseinlage hergestellt über das Verfahren gemäß einem der Ansprüche 11 bis 13;
(ii) Einbetten von mindestens einer Lage aus einer haftenden Verstärkungseinlage aus Schritt (i) in eine Gummimatrix in einer Pressform;
(iii) Pressen der Lagen aus Schritt (ii);
(iv) Vulkanisieren des verstärkten Gummiprodukts aus Schritt (iii) bei 140 bis 210 °C und 5 bis 110 bar für 5 bis 45 Minuten;
(v) Entnehmen des verstärkten Gummiprodukts aus Schritt (iv) aus der Pressform.

15. Verwendung der wässrigen, feststoffhaltigen, Tauchbadzusammensetzung gemäß einem der Ansprüche 1 bis 10 zur Beschichtung von Verstärkungseinlagen für Gummiprodukte.

## Claims

1. Aqueous, solids-containing dipping bath composition for treating reinforcing inserts for rubber products comprising the following components or consisting of these components,
(A) at least one blocked MDI mixture,
the MDI mixture comprising MDI oligomers of formula (I), n being a whole number from 1 to 8, 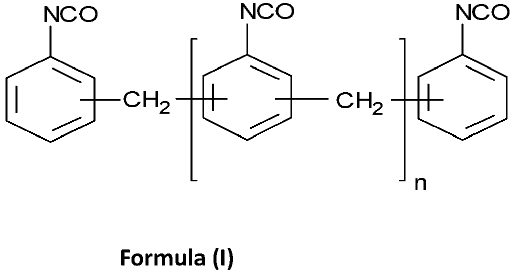 and MDI monomers;
(B) at least one latex; and
(C) at least one compound selected from the group consisting of polyacrylates, lignin sulphonates, lignin sulphonic acids and mixtures hereof;
wherein the dipping bath composition comprises less than 0,4% by weight epoxy, relative to the total weight of the dipping bath and
wherein the dipping bath composition comprises less than 1,0% by weight resorcinol, formaldehyde and the reaction products thereof, relative to the total weight of the dipping bath

2. Aqueous, solids-containing dipping bath composition according to claim 1, **characterised in that**
the solids proportion is 2 to 40% by weight, preferably 3 to 35% by weight and particularly preferably 5 to 30% by weight, respectively relative to the total weight of the dipping bath composition.

3. Aqueous, solids-containing dipping bath composition according to claim 1 or 2, **characterised in that**
the bath has the following composition, the parts by weight respectively relating to the total weight of the dipping bath composition:
(A) 0.1 to 25 parts by weight, preferably 0.2 to 20 parts by weight, particularly preferably 1 to 17 parts by weight;
(B) 1 to 80 parts by weight, preferably 8 to 50 parts by weight, particularly preferably 15 to 45 parts by weight;
(C) 0.1 to 15 parts by weight, preferably 0.25 to 12 parts by weight, particularly preferably 0.4 to 8 parts by weight; and
(D) 0 to 20 parts by weight, preferably 0.1 to 10 parts by weight and particularly preferably 0.1 to 3 parts by weight.

4. Aqueous, solids-containing dipping bath composition according to one of the preceding claims, **characterised in that**
the blocked MDI mixture (A) comprises MDI derivatives selected from the group consisting of MDI uretdione, adducts of MDI and/or MDI oligomers with other compounds, preferably with polyethylene glycol and mixtures hereof; and/or
the MDI is selected from the group consisting of 4,4'-MDI, 2,4'-MDI, 2,2'-MDI and mixtures hereof, the proportion of 2,4'-MDI and 2,2'-MDI being less than 10% by weight, preferably less than 8% by weight and particularly preferably the proportion of 2,4'-MDI and 2,2'-MDI being from 0.1 to 6% by weight, relative to the MDI mixture, particularly preferably the mixture comprising one or more MDI oligomers, n in formula (I) being a whole number from 1 to 8 and preferably from 1 to 6.

5. Aqueous, solids-containing dipping bath composition according to one of the preceding claims, **characterised in that**
the MDI mixture has the following composition:
(i) 25 to 60% by weight, preferably 25 to 49.9% by weight, of MDI monomers;
(ii) 40 to 75% by weight, preferably 50 to 74.9% by weight, of MDI oligomers; and
(iii) 0 to 9% by weight, preferably 0.1 to 6% by weight, of MDI derivatives selected from the group consisting of MDI uretdione, adducts of MDI and/or MDI oligomers with other compounds, preferably with polyethylene glycol and mixtures hereof;
the proportions of components (i) to (iii) adding up to 100% by weight.

6. Aqueous, solids-containing dipping bath composition according to one of the preceding claims, **characterised in that**
the at least one latex (B) is selected from the group consisting of styrene-butadiene-vinylpyridine copolymer, styrene-butadiene-vinylpyridine copolymer modified with carboxylic acid, styrene-butadiene copolymer, styrene-butadiene copolymer modified with carboxylic acid, nitrile-butadiene copolymer, natural latex, chloroprene latex and mixtures hereof.

7. Aqueous, solids-containing dipping bath composition according to one of the preceding claims, **characterised in that**
the at least one compound (C) is selected from the group consisting of polymers based on (meth)acrylic acid esters, (meth)acrylic acid amines, (meth)acrylic acid amides, copolymers based on (meth)acrylic acid esters, (meth)acrylic acid amines, (meth)acrylic acid amides, and mixtures hereof, and preferably selected from the group consisting of polystyrene acrylates, polyacrylic acid esters, lignin sulphonic acid salts, lignin sulphonic acid esters, lignin sulphonic acid ethers, lignin sulphonic acids and mixtures hereof.

8. Aqueous, solids-containing dipping bath composition according to one of the preceding claims, **characterised in that**
the dipping bath comprises at least one additive (D) and
the at least one additive (D) is selected from the group consisting of surfactants, defoamers, fillers, colourants, preservatives, thickening agents, acids, lyes, multivalent alcohols and mixtures hereof.

9. Aqueous, solids-containing dipping bath composition according to one of the preceding claims, **characterised in that**
the MDI mixture (A) is blocked with a compound which is selected from the group consisting of monophenols, in particular phenol, cresol, trimethylphenols and tert.-butylphenols, lactams, in particular ε-caprolactam, δ-valerolactam and laurinlactam, oximes, in particular methylethylketoxime, methylamylketoxime and cyclohexanone oxime, enol-forming compounds, in particular acetic acid ester, acetyl acetone and also mixtures hereof;
and which is preferably selected from the group consisting of monophenols, in particular phenol, cresol, trimethylphenols and tert.-butylphenols, lactams, in particular ε-caprolactam, δ-valerolactam and laurinlactam and mixtures hereof
and which is particularly preferably selected from the group consisting of phenol, ε-caprolactam and mixtures hereof, and
which is most preferably ε-caprolactam.

10. Aqueous, solids-containing dipping bath composition according to one of the preceding claims, **characterised in that**
the average particle diameter *d*₅₀ of the blocked MDI mixture is at most 2 µm; preferably 0.6 to 1.5 µm; and/or
the particle diameter *d*₁₀₀ of the blocked MDI mixture is at most 6 µm; preferably 0.6 to 5 µm; and/or
the blocked MDI mixture has a number-average molar mass Mₙ in the range of 550 to 1,200 g/mol and preferably of 700 to 1,100 g/mol.

11. Method for producing an adhesive reinforcing insert which comprises at least the following steps:
a) providing at least one reinforcing insert;
b) dipping the prepared reinforcing insert in at least one dipping bath composition according to one of the claims 1 to 10;
c) drying the reinforcing insert from step b) at 100 to 240°C;
d) annealing the coating of the reinforcing insert from step c) at 200 to 250°C.

12. Method according to claim 11, **characterised in that**
the reinforcing insert is selected from a compound from the group consisting of polyamide 6, polyamide 66, polyethylene terephthalate, polyethylene naphthalate, rayon, aramide, cotton, basalt fibres, sisal, hemp, flax, coconut fibres and mixtures hereof.

13. Method according to claim 11 or 12, **characterised in that**
the reinforcing insert is dipped, before step b), in an aqueous, solids-containing dipping bath composition which comprises at least one capped MDI mixture,
the MDI mixture comprising MDI oligomers of formula (I), n being a whole number from 1 to 8, 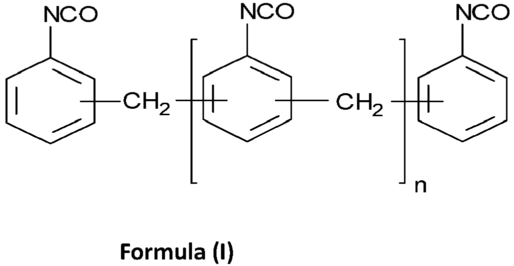 and MDI monomers.

14. Method for producing a reinforced rubber product, which comprises the following steps:
(i) providing at least one layer of an adhesive reinforcing insert produced via the method according to one of the claims 11 to 13;
(ii) embedding at least one layer of an adhesive reinforcing insert from step (i) in a rubber matrix in a pressing mould;
(iii) pressing the layers from step (ii);
(iv) vulcanising the reinforced rubber product from step (iii) at 140 to 210°C and 5 to 110 bar for 5 to 45 minutes;
(v) removing the reinforced rubber product from step (iv) from the pressing mould.

15. Use of the aqueous, solids-containing dipping bath composition according to one of the claims 1 to 10 for coating reinforcing inserts for rubber products.

## Revendications

1. Composition aqueuse de trempage contenant des solides pour le traitement d'inserts de renforcement pour produits en caoutchouc, contenant les composants suivants ou constituée de ces composants
(A) au moins un mélange de MDI bloqué,
le mélange de MDI contenant des oligomères MDI de formule (I), n'étant un nombre entier de 1 à 8, 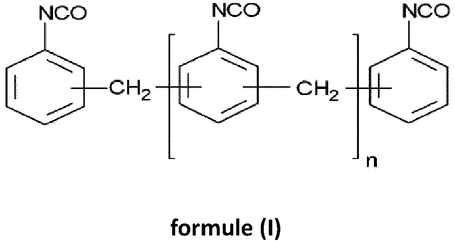 et contenant des monomères MDI ;
(B) au moins un latex; et
(C) au moins un composé choisi dans le groupe constitué des polyacrylates, lignosulfonates, acides lignosulfoniques et leurs mélanges ;
la composition de trempage contenant moins de 0,4 % en poids d'époxyde, par rapport au poids total de la composition de trempage, et
la composition de trempage contenant moins de 1,0 % en poids de résorcinol, de formaldéhyde et de leurs produits de réaction, par rapport au poids total de la composition de trempage.

2. Composition aqueuse de trempage contenant des solides selon la revendication 1, **caractérisée en ce que**
le pourcentage de solides est de 2 à 40 % en poids, de préférence 3 à 35 % en poids et de manière particulièrement préférée 5 à 30 % en poids, dans chaque cas par rapport au poids total de la composition de trempage.

3. Composition aqueuse de trempage contenant des solides selon la revendication 1 ou 2, **caractérisée en ce que**
celle-ci présente la composition suivante, les parties en poids étant basées dans chaque cas sur le poids total de la composition de trempage :
(A) 0,1 à 25 parties en poids, de préférence 0,2 à 20 parties en poids et de manière particulièrement préférée 1 à 17 parties en poids ;
(B) 1 à 80 parties en poids, de préférence 8 à 50 parties en poids et de manière particulièrement préférée 15 à 45 parties en poids ;
(C) 0,1 à 15 parties en poids, de préférence 0,25 à 12 parties en poids et de manière particulièrement préférée 0,4 à 8 parties en poids ; et
(D) 0 à 20 parties en poids, de préférence 0,1 à 10 parties en poids et de manière particulièrement préférée 0,1 à 3 parties en poids.

4. Composition aqueuse de trempage contenant des solides selon l'une des revendications précédentes, **caractérisée en ce que**
le mélange de MDI bloqué (A) des dérivés de MDI choisis dans le groupe constitué de l'uretdione de MDI, des produits d'addition de MDI et/ou des oligomères MDI avec d'autres composés, de préférence avec du polyéthylèneglycol et leurs mélanges et/ou
le MDI est choisi dans le groupe constitué du 4,4'-MDI,2,4' -MDI, 2,2'-MDI et leurs mélanges, le pourcentage de 2,4'-MDI et 2,2'-MDI étant inférieur à 10 % en poids, de préférence inférieur à 8 % en poids et de manière particulièrement préférée le pourcentage de 2,4'-MDI et 2,2'-MDI étant de 0,1 à 6 % en poids, par rapport au mélange de MDI, de manière particulièrement préférée, le mélange contient un ou plusieurs oligomères MDI, n dans la formule (I) étant un nombre entier de 1 à 8 et de préférence de 1 à 6.

5. Composition aqueuse de trempage contenant des solides selon l'une des revendications précédentes, **caractérisée en ce que**
le mélange de MDI présente la composition suivante :
(i) 25 à 60 % en poids, de préférence, 25 à 49,9 % en poids de monomères MDI ;
(ii) 40 à 75 % en poids, de préférence 50 à 74,9 % en poids d'oligomères MDI ; et
(iii) 0 à 9 % en poids, de préférence 0,1 à 6 % en poids de dérivés de MDI choisis dans le groupe constitué de l'uretdione de MDI, des produits d'addition de MDI et/ou des oligomères MDI avec d'autres composés, de préférence avec du polyéthylèneglycol et leurs mélanges ;
les pourcentages des composants (i) à (iii) totalisant 100 % en poids.

6. Composition aqueuse de trempage contenant des solides selon l'une des revendications précédentes, **caractérisée en ce que**
le au moins un latex (B) est choisi dans le groupe constitué d'un copolymère de styrène-butadiène-vinylpyridine, d'un copolymère de styrène-butadiène-vinylpyridine modifié avec un acide carboxylique, d'un copolymère de styrène-butadiène, d'un copolymère de styrène-butadiène modifié avec un acide carboxylique, d'un copolymère de nitrile-butadiène, de latex naturel, de latex de chloroprène et de leurs mélanges.

7. Composition aqueuse de trempage contenant des solides selon l'une des revendications précédentes, **caractérisée en ce que**
le au moins un composé (C) est choisi dans le groupe constitué de polymères à base d'esters (méth)acryliques, d'amines de l'acide (méth)acrylique, d'amides de l'acide (méth)acralique, de copolymères à base d'esters d'acide (méth)acrylique, d'amines d'acide (méth)acrylique, d'amides d'acide (méth)acrylique et leurs mélanges, et de préférence choisis dans le groupe constitué des acrylates de polystyrène, esters d'acide polyacrylique, sels d'acide lignosulfonique, esters d'acide lignosulfonique, éthers d'acide lignosulfonique, acides lignosulfoniques et leurs mélanges.

8. Composition aqueuse de trempage contenant des solides selon l'une des revendications précédentes, **caractérisée en ce que**
la composition de trempage contient au moins un additif (D) et le au moins un additif (D) est choisi dans le groupe constitué de tensioactifs, antimousses, charges, colorants, conservateurs, épaississants, acides, bases, polyalcools et leurs mélanges.

9. Composition aqueuse de trempage contenant des solides selon l'une des revendications précédentes, **caractérisée en ce que**
le mélange de MDI (A) est bloqué avec un composé, qui est choisi dans le groupe constitué des monophénols, en particulier de phénol, crésol, triméthylphénols et tert-butylphénols, lactames, en particulier ε-caprolactame, δ-valérolactame et laurolactame, oximes, en particulier méthyl-éthyl-cétoxime, méthyl-amyl-cétoxime et cyclohexanone oxime, composés formant énol, en particulier l'ester de l'acide acétique, l'acétylacétone et leurs mélanges ;
et qui est choisi de préférence dans le groupe constitué des monophénols, en particulier le phénol, crésol, les triméthylphénols et les tert-butylphénols, lactames, en particulier l'ε-caprolactame, le δ-valérolactame et le laurinlactame et leurs mélanges,
et qui est choisi de manière particulièrement préférée dans le groupe constitué du phénol, de l'ε-caprolactame et de leurs mélanges, et
qui est le plus préférablement l'ε-caprolactame.

10. Composition aqueuse de trempage contenant des solides selon l'une des revendications précédentes, **caractérisée en ce que**
le diamètre moyen des particules dso du mélange de MDI bloqué est au maximum de 2 µm, de préférence 0,6 à 1,5 µm ; et/ou
le diamètre des particules d₁₀₀ du mélange de MDI bloqué est au maximum de 6 µm, de préférence 0,6 à 5 µm ; et/ou
le mélange de MDI bloqué présente un poids moléculaire moyen en nombre Mₙ dans la plage de 550 à 1200 g/mol et de préférence de 700 à 1100 g/mol.

11. Procédé de fabrication d'un insert de renforcement adhésif, lequel comprend au moins les étapes suivantes :
a) la fourniture d'au moins un insert de renforcement ;
b) l'immersion de l'insert de renforcement fourni dans au moins une composition de trempage selon l'une des revendications 1 à 10 ;
c) le séchage de l'insert de renforcement de l'étape b) à 100 à 240 °C ;
d) la cuisson du revêtement de l'insert de renforcement de l'étape c) à 200 à 250 °C.

12. Procédé selon la revendication 11, **caractérisé en ce que**
l'insert de renforcement est choisi dans un composé du groupe constitué du polyamide 6, polyamide 6,6, polyéthylène téréphtalate, polyéthylène naphtalate, de la rayonne, de l'aramide, du coton, des fibres de basalte, du sisal, chanvre, lin, des fibres de coco et de leurs mélanges.

13. Procédé selon la revendication 11 ou 12, **caractérisé en ce que**
l'insert de renforcement est immergé avant l'étape b) dans une composition aqueuse de trempage contenant des solides, qui contient au moins un mélange de MDI bloqué,
le mélange de MDI contenant des oligomères MDI de formule (I), n étant un nombre entier de 1 à 8, 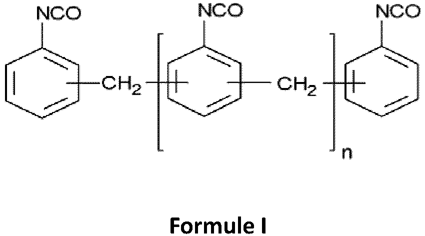 et contenant des monomères MDI.

14. Procédé de fabrication d'un produit en caoutchouc renforcé, lequel comprend les étapes suivantes :
(i) la fourniture d'au moins une couche d'un insert de renforcement adhésif produit via le procédé selon l'un des revendications 11 à 13 ;
(ii) l'incorporation d'au moins une couche d'un insert de renforcement adhésif provenant de l'étape (i) dans une matrice en caoutchouc dans un moule de compression ;
(iii) le moulage par compression des couches de l'étape (ii) ;
(iv) la vulcanisation du produit en caoutchouc renforcé de l'étape (iii) à 140 à 210 ° C et 5 à 110 bars pendant 5 à 45 minutes
(v) le retrait du moule de compression du produit en caoutchouc renforcé de l'étape (iv).

15. Utilisation de la composition aqueuse de trempage contenant des solides selon l'une des revendications 1 à 10 pour le revêtement d'inserts de renforcement pour produits en caoutchouc.
